# EUROPEAN PATENT SPECIFICATION

(11) **EP 0 713 638 B1**
(45) Date of publication and mention of the grant of the patent: **25.10.2000**
(21) Application number: 95203224.1
(22) Date of filing: 23.11.1995
(51) Int. Cl.: A01C 17/00, A01B 59/06, G01G 19/08

(54) **A weighing implement**
Waagevorrichtung
Instrument de pesage

(30) Priority: 25.11.1994 NL 9401976; 24.10.1995 NL 1001492
(43) Date of publication of application: 29.05.1996
(73) Proprietor: MAASLAND N.V., 3155 PD Maasland (NL)
(72) Inventor: Bom, Cornelis Johannes Gerardus, NL-3181 VC Rozenburg (NL); van der Waal, Pieter Jacob, NL-3145 LB Maassluis (NL)
(74) Representative: Corten, Maurice Jean F.M.

(56) References cited:
- EP-A- 0 181 034
- EP-A- 0 218 299
- EP-A- 0 407 705
- EP-A- 0 537 857
- FR-A- 2 677 119

## Description

The present invention relates to a weighing implement for weighing a load carrier, which implement comprises a first frame and a second frame that are interconnected by means of a guide means which, at least in the direction of weighing, allows a low-frictional movement of the second frame relative to the first frame, while therebetween there is provided a sensor, by means of which is recorded the force that, seen in the direction of weighing, is exercised by the second frame on the first frame, the said first frame including first fastening means for its connection to the lifting hitch and the said second frame being provided with second fastening means for its connection to the load carrier.

A weighing implement of this type is known from EP-A-537857.

In this known construction the first and second fastening means are situated in a vertical plane which is at a distance from a vertical plane through the guide means. This latter may present problems when a relatively heavy load carrier is connected to the weighing implement and the second frame exercises forces on the first frame in a direction other than the direction of weighing. In particular the guide means between the first and second frame then appears to be a weak link in the weighing implement. It is true that part of the problem might be removed by strengthening the guide means, but this measure has the disadvantage of increasing the frictional force between the first and second frame, which would adversely affect the measuring result.

The invention aims at obtaining a weighing implement of the above-mentioned type, in which this drawback does not occur or is at least limited to a considerable extent.

According to the invention, this will be achieved by positioning the first and the second coupling means in a plane, in which at least part of the guide means is situated as well. In this manner, the forces exercised by the second frame on the first frame, or vice versa, that are active in a direction other than the direction of weighing, are transferred directly by the guide means from the second frame to the first frame, or vice versa. Consequently, the forces exercised on the guide means will cause practically no torque or moment, so that the guide means is prevented from being torn off.

According to a feature of the invention, the guide means is constituted by one or more relatively thin strip/strips that is/are provided horizontally between the frames and is/are preferably made of leaf spring steel. The first and second coupling means being situated in the same plane as part of the strip/strips, the latter will be almost exclusively be loaded by tension. It will be clear that the horizontally disposed strip/strips will be able to resist an enormous tensile load prior to being torn off. In this way there is obtained a simple, but solid, strong and low-frictional guide means. In a preferred embodiment according to the invention, the frames are interconnected by means of a strip at at least three places. According to an other inventive feature, the strips have short bending parts directly at their fastening points to the frames. These short bending parts ensure that, seen in a horizontal direction, loads are absorbed properly, while the stiffness of the guide means will not be such so as to affect the weighing result. According to an other inventive feature, for the purpose of strengthening a strip, there is provided a supporting strip on both sides of the central part thereof.

According to again an other feature of the invention, the first frame has the shape of a trapezium whose parallel sides are horizontal, the longer one being situated at the bottom, while the second frame is 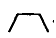 -shaped. According to an other inventive feature, a first strip is disposed near the upper side between the frames and the two other strips are provided between the legs of the frames near the lower end of each of the legs.

In accordance with a further feature of the invention, both the first and the second fastening means are provided with three fastening members, the first one of which is arranged near the upper sides of the frames and the other ones are disposed near the lower end of each of the legs of the frames. The fastening members may be arranged on the frames in such a manner that they can easily be connected to a standard three-point lifting hitch. According to an inventive feature, near the lower ends of the frames, the fastening members of the first frame are situated below the fastening members of the second frame. According to again an other inventive feature, near the upper sides of the frames, the fastening member of the first frame is situated at a lower level than that of the second frame, and the fastening member of the first frame is arranged at the weighing implement side where the load carrier is connected, while the fastening member of the second frame is provided at the weighing implement side where the tractor is connected, which latter enables the load carrier to be mounted relatively closely behind the tractor, so as to obtain a favourable position of the centre of gravity of the load carrier relative to the tractor.

In a preferred embodiment in accordance with the invention, the sensor, by means of which the force of the second frame on the first one is determined, includes a bending rod provided with strain gauges. According to an other inventive feature, the weighing implement comprises an electronic measuring device including weight correction means, by means of which the force determined by the sensor is corrected in such a way that, independently of the angle at which the weighing implement is situated relative to a reference plane, the actual weight of at least the load carrier is defined. In this manner, particularly in hilly regions, the actual weight of the load carrier can always be determined accurately. In a preferred embodiment in accordance with the invention, the weight correction means comprise a clinometer.

According to the inventive idea, the above-described weighing implement will be provided with electronics for a fertilizer spreader, a sowing machine, a silage cutter and a mixing-dosing waggon. During operation of such load carriers, their weight is subject to change and therefore, in accordance with a further inventive feature, by means of the electronic measuring device, the decrease in weight of material present in a storage box, e.g. the hopper of a fertilizer spreader, can be defined and, on the basis of this decrease in weight and of the desired decrease in weight, the electronic measuring device supplies an operating signal to a dosing installation, so as to obtain from the storage box the desired bulk stream or weight decrease per unit of time. In accordance with again an other inventive feature, the tare weight and the gross weight of the load carrier can be defined by means of the electronic measuring device and be recorded in a memory, while in the electronic measuring device there has been inputted a threshold value for the gross weight, upon excess of which a signal will be supplied. In that case, the attention of the operating person is drawn to the fact that both a surplus weight and/or a minimum weight of the load carrier are/is recorded by the weighing implement. According to a further inventive feature, it is possible to point out to an operating person, by means of an auditive signal and/or a visual signal, that the threshold value has been exceeded. According to an other feature of the invention, the threshold value is adjustable. In a preferred embodiment of the invention, the threshold value is constituted by a minimum nett weight of the material, such as fertilizer, seed, fodder, etc., present in the hopper of a load carrier.

For a better understanding of the invention and to show how the same may be carried into effect, reference will now be made, by way of example, to the accompanying drawings, in which:
Figure 1 shows, in a side view, a weighing implement which is connected to the lifting hitch of a tractor and whose other side is connected to a load carrier constituted here by a fertilizer spreader;
Figure 2 shows, in a front view, the weighing implement in accordance with Figure 1;
Figure 3 shows, in a plan view, the weighing implement of Figure 2, taken on the line III-III therein;
Figure 4 shows, in a side view, an alternative weighing implement in accordance with Figures 1 tot 3, in which alternative the lower guide means are designed in the form of a knife-edge bearing;
Figure 5 shows a front view of the knife-edge bearing, taken on the line V - V in Figure 4;
Figure 6 shows a plan view of the knife-edge bearing, taken on the line VI - VI in Figure 5, and
Figure 7 shows a detail of the knife-edge bearing.

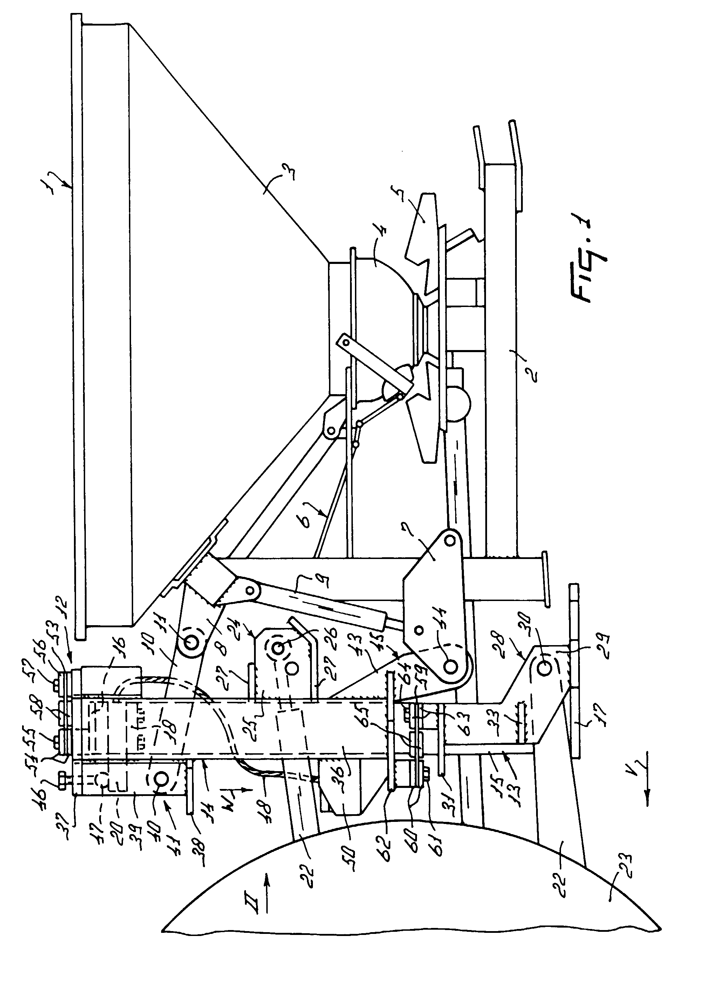

Figure 1 shows a spreader implement 1 capable of being moved during operation, which implement in particular serves to spread material on agricultural fields. The implement comprises a frame 2, on which there is arranged a hopper or storage box 3. At the bottom side of the hopper 3 there is provided a dosing member 4, while a spreading member 5 is situated therebelow. The dosing member 4 is adjustable by means of an adjusting mechanism 6. Furthermore, the frame 2 comprises strips 7, 8 serving as coupling members. For the purpose of spreading over edges, the implement is also provided with a hydraulically operable cylinder 9, with the aid of which the implement is capable of being tilted about an axis in the direction of travel V. The strip 8 includes an extension strip 10, which is pivotable about a horizontal shaft 11. The spreader implement 1 is connected to a weighing implement 12 by means of the extension strip 10 and the strip 7.

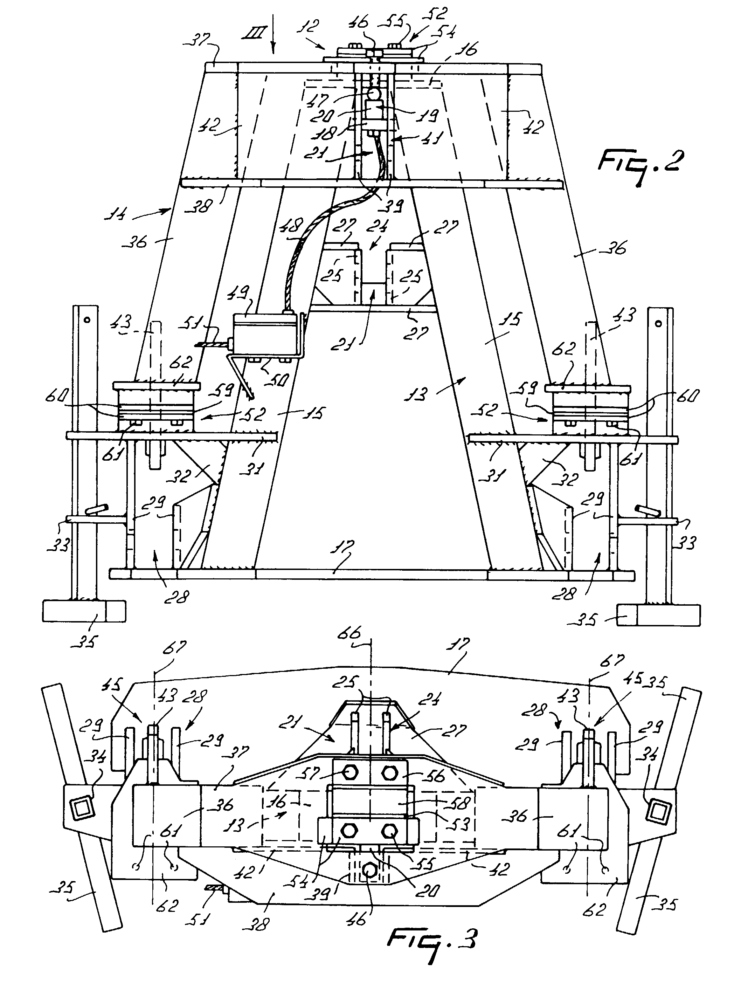

Figure 2 shows in detail the weighing implement 12, which comprises a first trapezium-shaped frame 13 and a second 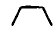 -shaped frame 14, by which the frame 13 is surrounded. The first frame 13 includes two converging legs 15, which are interconnected at their upper sides by means of a connecting strip 16 and at their lower sides by means of a connecting strip 17. The legs 15 are made of profiled tube. Near the upper side of the first frame 13 there is provided between the legs 15 a further strip 18, on which there is arranged a weight measuring unit 19 including a bending rod 20 provided with (non-shown) strain gauges. The first frame 13 comprises fastening means 21, with the aid of which the first frame 13 can be connected to a three-point lifting hitch 22 of a tractor 23. The fastening means 21 comprise a first upper coupling member 24, which is arranged near the upper side of the first frame 13 between the legs 15. The first upper coupling member 24 includes two spaced-apart lugs 25, which are provided with a borehole 26 (Figure 1, 3). The lugs 25 are supported by strips 27 that are connected with the legs 15 of the first frame 13. The fastening means 21 comprise two further first lower coupling members 28, each of which is arranged near the lower side of a leg 15. The first lower coupling members 28 are located outside the trapezium-shaped circumference of the first frame 13 and are attached to the lower side of the profiled beam of the legs 15. The first lower coupling members 28 comprise two spaced-apart lugs 29, which are attached at their lower sides to the strip 17 interconnecting the two legs 15 (Figure 2, 3). Furthermore, the lugs 29 are provided with boreholes 30, through which a pin of the lower lifting arms of the lifting hitch 22 can be inserted. The inner lugs 29 of each of the coupling members 28 are welded each on a leg 15. Via a horizontal strip 31 near its upper side, each of the outer lugs 29 is also connected with the legs 15 of the first frame 13. The horizontal strips 31 are supported by a strut 32, which is also connected with a leg 15. Against each of the outer lugs 29, at some distance from the horizontal strip 31, there is arranged a horizontal strip 33, which together with part of the strip 31 constitutes a fork that is provided with boreholes 34, through which removable supporting legs 35 are inserted.

The first frame 13 is surrounded by the second frame 14, which comprises legs 36 also made of profiled beams that are interconnected at their upper sides by means of a horizontal connecting strip 37. The legs 36 of the second frame 14 are parallel to the legs 15 of the first frame 13 and are situated at some distance therefrom. Between the legs 36, at some distance from the upper horizontal strip 37, there is provided a second horizontal connecting strip 38. Between the horizontal connecting strip 37 and the second horizontal connecting strip 38, there are disposed two spaced-apart vertical strips 39, each of which is provided with a borehole 40. The vertical strips 39 constitute the second upper coupling member 41 for connecting a load carrier, in the present embodiment formed by the spreader implement 1 attached by means of the extension strip 10 (Figure 1). Additionally, between the vertical strips 39 and the profiled beams 36, and between the horizontal strips 37 and 38, there are provided screens 42.

Near its lower side, each of the legs 36 is provided with downwardly extending lugs 43, which are arranged perpendicularly to the profiled beams and have a borehole 44. These lugs-cum-boreholes constitute the second lower coupling members 45, to which the spreader implement 1 can be connected.

Centrally between the vertical strips 39, the horizontal strip 37 is provided with a screw-threaded borehole, through which a bolt 46 is inserted. The bolt 46 is supported at its lower end by a ball 47, which is disposed in a recess in the bending rod 20. Via the bolt 46 and the ball 47, the weight of the second frame 14 and the load carrier to be connected thereto is transferred to the bending rod 20, which is connected to the first frame 13. Via an electric line 48, the weight measuring unit 19 is connected with an electronic measuring device 49 provided on the first frame 13 by means of a support 50.

The electronic measuring device 49 comprises (non-shown) weight correction means, by means of which the weight determined by the weight measuring unit 19 is corrected in such a way that, independently of the angle at which the weighing implement 12 is located relative to a reference plane, the actual weight of at least a load carrier is defined. In the present embodiment, the weight correction means comprise a clinometer. Furthermore, the electronic measuring device 49 is connected via a second electric line 51 to a (non-shown) spreading computer, by means of which the dosing member can be adjusted automatically.

In the weighing implement 12, the first frame 13 is connected to the second frame 14 by means of a guide means 52. The guide means 52 is constructed so as to effect, at least in the weighing direction W, a low-frictional movement of the second frame 14 relative to the first frame 13. In the present embodiment, the guide means 52 is constituted by three relatively thin spring steel strips that are provided between the first frame 13 and the second frame 14. A first spring steel strip 53 is disposed, near the upper side, between the frames 13 and 14 and is clamped at one end by block-shaped strips 54 attached on the upper side of the connecting strip 16 of the first frame 13 by means of two bolts 55. The other end of the first spring steel strip 53 is also clamped between two block-shaped strips 56 by means of bolts 57 and attached to the horizontal connecting strip 37 of the second frame 14. In order to strengthen the first spring steel strip 53, there is provided a supporting strip 58 on both sides of the central part thereof. Furthermore, the guide means 52 comprises two second spring steel strips 59, each of which is located near the lower end of a leg 36 of the second frame 14. At one end, the second spring steel strip 59 is clamped by block-shaped strips 60 which are attached, by means of two bolts 61, at a horizontal plate 62 provided against the lower end of a leg 36. The other end of the second spring steel strip 59 is also clamped between block-shaped strips 63. The block-shaped strips 63 are arranged, by means of bolts 64, on the horizontal strip 31 of the first frame 13. The spring steel strips 59 are also strengthened by means of supporting strips 65 provided on both sides of the central part thereof.

As is shown in Figures 2 and 3, the first upper coupling member 24 and the second upper coupling member 41 are situated in an imaginary vertical plane, indicated in Figure 3 by the interrupted line 66, and which also intersects the first upper spring steel strip 53. The first lower coupling members 28 and the second lower coupling members 45, too, are situated in an imaginary vertical plane, indicated in Figure 3 by the interrupted lines 67, which vertical planes 67 also intersect the second spring steel strips 59. The position of the first (53) and the second (59) spring steel strips in the vertical planes 66, respectively 67, is particularly favourable due to the fact that forces, which are exercised on the coupling members 24, 28, 41 and 45 in a direction other than the direction of weighing, are transferred horizontally by the first and second spring steel strips 53, 59 from the one frame to the other. In this manner, the spring steel strips 53, 59 are only loaded by tension, so that they may have a relatively thin construction and nevertheless are capable of resisting enormous forces, without being torn off. Thin spring steel strips have the advantage of effecting, in the direction of weighing, a relatively low-frictional movement of the one frame relative to the other, so that the measurement will hardly be affected, if at all.

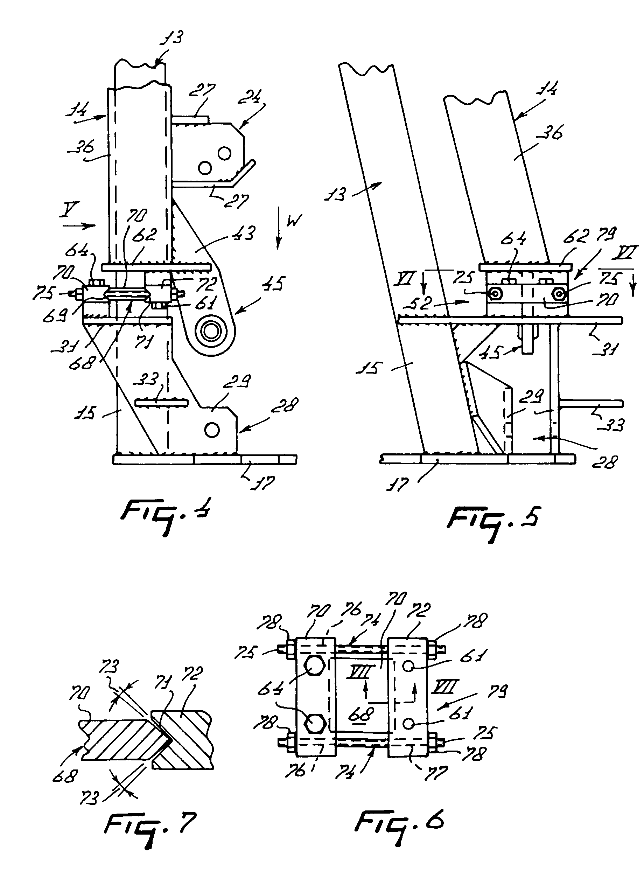

Figures 4 to 7 show an alternative weighing implement which, apart from the lower guide means 59, is identical to the weighing implement 12 in accordance with Figures 1 to 3. Corresponding parts have been indicated by the same reference numerals.

Figure 4 shows a side view of one of the two lower guide means 52, which are designed in the form of a knife-edge bearing 79. They are constructed in such a way that, at least in the weighing direction W, there is effected a low-frictional movement of the second frame 14 relative to the first frame 13. In the present embodiment, the lower guide means 52 are constituted by a rectangular plate 68 having two-sidedly bevelled edges at opposite ends. The rectangular plate 68 has a thickness of approximately 1 cm and, preferably, is made of tempered steel. The rectangular plate 68 is arranged between the frames 13 and 14, one V-shaped edge of which plate is accomodated in a V-shaped recess 69 in a block-shaped strip 70. The opposite V-shaped edge is accomodated in a V-shaped recess 71 in a block-shaped strip 72. The walls of the recesses 69, 71, preferably, consist of tempered steel. As is apparent from Figure 7, the walls of the V-shaped recesses 69, 71 and the bevelled edges of the rectangular plate 68 include an angle 73 of approximately 5°. The block-shaped strip 70 is arranged by means of bolts 64 on the horizontal strip 31 of the first frame 13, and the block-shaped strip 72 at the horizontal plate 62 of the second frame 14. When a force is exercised in the weighing direction W, then the rectangular plate 68 between the block-shaped strips 70, 72 will be loaded by tension by the moment yielded thereby, while the knife-edge bearing allows a low-frictional movement in the weighing direction W.

In order to prevent the rectangular plates 68 from getting free from the block-shaped strips 70, 72, they are locked by means of tensile elements in the form of tensile rods 74. The tensile rods 74 include threaded ends 75, one of which is inserted through a borehole 76 in the block-shaped strip 70 and the other through a borehole 77 in the block-shaped strip 72. Such a tensile rod 74 is arranged on both sides of the rectangular plate 68. Near the V-shaped recesses 69, 71, the boreholes 76, 77 have a slightly larger diameter than that of the tensile rods 74, while approximately the last 5 mm of the boreholes 76, 77 have a diameter identical to that of the tensile rods 74. Furthermore, the centre lines of the tensile rods 74 are located approximately in the same horizontal plane as the centre plane of the rectangular plate 68. Owing to this, the tensile rods 74 can be mounted under pre-tension by tightening of the nuts, without it resulting in a moment in the knife-edge bearing, since the forces lie in one plane.

The tensile rods 74 keep the rectangular plates 68 locked in the V-shaped recesses 69, 71, when a force is exercised in a direction other than the weighing direction W. This may be the case when the tractor 23 with weighing implement 12 and spreader device 1 travels through a hole in the field, and the latter is moved upwardly at a considerable speed and force. Furthermore, the tensile rods 74 also absorb the forces that are created when the tractor 23 is driven in a curve, and the spreader device 1 has a tendency to break away due to the then occurring centrifugal force. Preferably, the tensile rods 74 are mounted under a pre-tension which corresponds to the maximum forces to be expected in the knife-edge bearing 79. As a result, the tensile rods 74 will exclusively be loaded by tension. In a preferred embodiment of the invention, the tensile rods 74 are mounted in advance under a pre-tension of approximately 1.000 kg.

In order to prevent the guide means 52 from corroding, which would adversely affect the measurements, the guide means parts are provided with a coating of synthetic material or rubber.

In a (non-shown) alternative embodiment of the lower guide means 52, the tensile rods 74 are replaced by thin spring steel strips which are also mounted under a pre-tension. These thin spring steel strips are advantageous in that they offer little resistance in the weighing direction W.

## Claims

1. A weighing implement (12) for weighing a load carrier, which implement comprises a first frame (13) and a second frame (14) that are interconnected by means of a guide means (52) which, at least in the direction of weighing (W), allows a low-frictional movement of the second frame (14) relative to the first frame (13), while therebetween there is provided a sensor (19), by means of which is recorded the force that, seen in the direction of weighing (W), is exercised by the second frame (14) on the first frame (13), the said first frame (13) including first fastening means (28) for its connection to a lifting hitch (22) and the said second frame (14) being provided with second fastening means (45) for its connection to the load carrier, characterized in that the first (28) and the second coupling means (45) are positioned in a plane, in which at least part of the guide means (52) is situated as well.

2. A weighing implement as claimed in claim 1, characterized in that the guide means (52) is constituted by one or more relatively thin strip/strips (53, 59) that is/are provided horizontally between the frames (13, 14) and that is/are preferably made of leaf spring steel.

3. A weighing implement as claimed in claim 2, characterized in that the frames (13, 14) are interconnected by means of a strip (53, 59) at at least three places.

4. A weighing implement as claimed in claim 2 or 3, characterized in that the strips (53, 59) have short bending parts directly at their fastening points to the frames (13, 14).

5. A weighing implement as claimed in claim 2, 3 or 4, characterized in that there is provided a supporting strip (58, 65) on both sides of the central part of a strip (53, 59).

6. A weighing implement as claimed in any one of the preceding claims, characterized in that the first frame (13) has the shape of a trapezium whose parallel sides are horizontal, the longer one being situated at the bottom, while the second frame is 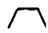 -shaped.

7. A weighing implement as claimed in any one of claims 3 to 6, characterized in that a first strip (53) is disposed near the upper side between the frames (13, 14) and the two other strips (59) are provided between the legs of the frames (13, 14) near the lower end of each of the legs.

8. A weighing implement as claimed in any one of the preceding claims, characterized in that both the first and the second fastening means (28, 45) are provided with three fastening members, the first one of which is arranged near the upper sides of the frames (13, 14) and the other ones are disposed near the lower end of each of the legs of the frames (13, 14).

9. A weighing implement as claimed in claim 8, characterized in that near the lower ends of the frames (13, 14), the fastening members of the first frame (13) are situated below the fastening members of the second frame (14).

10. A weighing implement as claimed in claim 8 or 9, characterized in that near the upper sides of the frames (13, 14), the fastening member of the first frame (13) is situated at a lower level than that of the second frame (14), and in that the fastening member (24) of the first frame (13) is arranged at the weighing implement side where the load carrier is connected, while the fastening member (41) of the second frame (14) is provided at the weighing implement side where a tractor is connected.

11. A weighing implement as claimed in any one of the preceding claims, characterized in that the sensor (19), by means of which the force of the second frame (14) on the first one (13) is determined, includes a bending rod (20) provided with strain gauges.

12. A weighing implement as claimed in any one of the preceding claims, characterized in that the weighing implement comprises an electronic measuring device (49) including weight correction means, by means of which the force determined by the sensor (19) is corrected in such a way that, independently of the angle at which the weighing implement is situated relative to a reference plane, the actual weight of at least the load carrier is defined.

13. A weighing implement as claimed in claim 12, characterized in that the weight correction means comprise a clinometer.

14. A weighing implement as claimed in claim 12 or 13, characterized in that by means of the electronic measuring device (49) at least the decrease in weight can be defined of material present in a storage box, e.g. the hopper (3) of a fertilizer spreader (1), and that, on the basis of this decrease in weight and of the desired decrease in weight, the electronic measuring device (49) supplies an operating signal to a dosing installation, so as to obtain the desired bulk stream from the storage box.

15. A weighing implement as claimed in any one of the preceding claims, characterized in that, by means of the electronic measuring device (49), the tare weight and the gross weight of the load carrier can be defined and be recorded in a memory, while in the electronic measuring device (49) there has been inputted a threshold value for the gross weight, upon excess of which a signal will be supplied.

16. A weighing implement as claimed in claim 15, characterized in that the signal is an auditive signal and/or a visual signal.

17. A weighing implement as claimed in claim 15, characterized in that the threshold value is adjustable.

18. A weighing implement as claimed in claim 15, characterized in that the threshold value is constituted by a minimum nett weight of the material, such as fertilizer, seed, fodder, etc., present in the hopper of a load carrier.

## Patentansprüche

1. Wägevorrichtung (12) zum Wägen eines Lastträgers, wobei die Vorrichtung einen ersten Rahmen (13) und einen zweiten Rahmen (14) aufweist, die durch eine Führungsvorrichtung (52) miteinander verbunden sind, welche zumindest in Wägerichtung (W) eine reibungsarme Bewegung des zweiten Rahmens (14) relativ zu dem ersten Rahmen (13) ermöglicht, wobei zwischen diesen ein Sensor (19) angeordnet ist, mittels dessen die Kraft aufgezeichnet wird, die in Wägerichtung (W) von dem zweiten Rahmen (14) auf den ersten Rahmen (13) ausgeübt wird, wobei der erste Rahmen (13) eine erste Anschlußvorrichtung (28) für seinen Anschluß an eine Hebevorrichtung (22) und der zweite Rahmen (14) eine zweite Anschlußvorrichtung (45) für seinen Anschluß an den Lastträger aufweist,
dadurch gekennzeichnet, daß die erste Anschlußvorrichtung (28) und die zweite Anschlußvorrichtung (45) in einer Ebene angeordnet sind, in der zumindest auch ein Teil der Führungsvorrichtung (52) liegt.

2. Wägevorrichtung nach Anspruch 1,
dadurch gekennzeichnet, daß die Führungsvorrichtung (52) durch ein oder mehrere relativ dünne Flachteile (53, 59) gebildet ist, die in horizontaler Richtung zwischen den Rahmen (13, 14) angeordnet und vorzugsweise aus Blattfederstahl hergestellt sind.

3. Wägevorrichtung nach Anspruch 2,
dadurch gekennzeichnet, daß die Rahmen (13, 14) an mindestens drei Stellen durch ein Flachteil (53, 59) miteinander verbunden sind.

4. Wägevorrichtung nach Anspruch 2 oder 3,
dadurch gekennzeichnet, daß die Flachteile (53, 59) unmittelbar an ihren Befestigungsstellen an den Rahmen (13, 14) kurze Biegeteile aufweisen.

5. Wägevorrichtung nach Anspruch 2, 3 oder 4,
dadurch gekennzeichnet, daß auf beiden Seiten des mittleren Teiles eines Flachteiles (53, 59) eine Stützplatte (58, 65) angebracht ist.

6. Wägevorrichtung nach einem der vorhergehenden Ansprüche,
dadurch gekennzeichnet, daß der erste Rahmen (13) die Form eines Trapezes hat, dessen parallele Seiten horizontal angeordnet sind, wobei die längere Seite unten liegt, während der zweite Rahmen 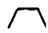 -förmig ist.

7. Wägevorrichtung nach einem der Ansprüche 3 bis 6,
dadurch gekennzeichnet, daß ein erstes Flachteil (53) nahe der Oberseite zwischen den Rahmen (13, 14) und die beiden anderen Flachteile (59) zwischen den Schenkeln der Rahmen (13, 14) nahe dem unteren Ende jedes Schenkels angeordnet sind.

8. Wägevorrichtung nach einem der vorhergehenden Ansprüche,
dadurch gekennzeichnet, daß die erste wie auch die zweite Anschlußvorrichtung (28, 45) drei Befestigungsglieder aufweisen, von denen das erste nahe den Oberseiten der Rahmen (13, 14) angebracht ist und die anderen nahe dem unteren Ende jedes Schenkels der Rahmen (13, 14) angeordnet sind.

9. Wägevorrichtung nach Anspruch 8,
dadurch gekennzeichnet, daß nahe den unteren Enden der Rahmen (13, 14) die Befestigungsglieder des ersten Rahmens (13) unter den Befestigungsgliedern des zweiten Rahmens (14) angeordnet sind.

10. Wägevorrichtung nach Anspruch 8 oder 9,
dadurch gekennzeichnet, daß nahe den Oberseiten der Rahmen (13, 14) das Befestigungsglied des ersten Rahmens (13) weiter unten angeordnet ist als das des zweiten Rahmens (14), und daß das Befestigungsglied (24) des ersten Rahmens (13) auf der Seite der Wägevorrichtung angeordnet ist, auf der der Lastträger angeschlossen ist, während das Befestigungsglied (41) des zweiten Rahmens (14) auf der Seite der Wägevorrichtung angeordnet ist, auf der ein Schlepper angeschlossen ist.

11. Wägevorrichtung nach einem der vorhergehenden Ansprüche,
dadurch gekennzeichnet, daß der Sensor (19), von dem die von dem zweiten Rahmen (14) auf den ersten Rahmen (13) ausgeübte Kraft gemessen wird, einen Biegestab (20) enthält, der mit Dehnungsmessern versehen ist.

12. Wägevorrichtung nach einem der vorhergehenden Ansprüche,
dadurch gekennzeichnet, daß die Wägevorrichtung eine elektronische Meßvorrichtung (49) mit einer Gewichtskorrekturvorrichtung aufweist, mittels der die von dem Sensor (19) gemessene Kraft derart korrigiert wird, daß unabhängig von dem Winkel, in dem die Wägevorrichtung relativ zu einer Bezugsebene angeordnet ist, das tatsächliche Gewicht zumindest des Lastträgers ermittelt wird.

13. Wägevorrichtung nach Anspruch 12,
dadurch gekennzeichnet, daß die Gewichtskorrekturvorrichtung ein Klinometer umfaßt.

14. Wägevorrichtung nach Anspruch 12 oder 13,
dadurch gekennzeichnet, daß mit Hilfe der elektronischen Meßvorrichtung (49) zumindest die Gewichtsabnahme von Gut zu ermitteln ist, das sich in einem Aufnahmebehälter, wie z. B. dem Vorratsbehälter (3) eines Düngerstreuers (1), befindet, und daß auf der Basis dieser Gewichtsabnahme und der gewünschten Gewichtsabnahme die elektronische Meßvorrichtung (49) ein Steuersignal an eine Dosiervorrichtung gibt, um den gewünschten Gutstrom aus dem Aufnahmebehälter zu erzielen.

15. Wägevorrichtung nach einem der vorhergehenden Ansprüche,
dadurch gekennzeichnet, daß mittels der elektronischen Meßvorrichtung (49) das Leergewicht und das Bruttogewicht des Lastträgers zu ermitteln und in einem Speicher aufzuzeichnen ist, wobei in die elektronische Meßvorrichtung (49) ein Grenzwert für das Bruttogewicht eingegeben wurde, bei dessen Überschreiten ein Signal gegeben wird.

16. Wägevorrichtung nach Anspruch 15,
dadurch gekennzeichnet, daß das Signal ein akustisches und/oder ein visuelles Signal ist.

17. Wägevorrichtung nach Anspruch 15,
dadurch gekennzeichnet, daß der Grenzwert einstellbar ist.

18. Wägevorrichtung nach Anspruch 15,
dadurch gekennzeichnet, daß der Grenzwert durch ein minimales Nettogewicht des im Vorratsbehälter eines Lastträgers befindlichen Gutes, wie z. B. Kunstdünger, Saatgut, Futter, etc., gebildet wird.

## Revendications

1. Instrument de pesage (12) pour peser un porte-charge, lequel instrument comporte un premier châssis (13) et un second châssis (14) qui sont connectés mutuellement par l'intermédiaire de moyens de guidage (52) qui, au moins dans la direction de pesage (W), permettent un mouvement à faible frottement du second châssis (14) par rapport au premier châssis (13), alors qu'entre ceux-ci est agencé un capteur (19), par l'intermédiaire duquel est enregistrée la force qui, dans la direction de pesage (W), est exercée par le second châssis (14) sur le premier châssis (13), ledit premier châssis (13) comportant des premiers moyens de fixation (28) pour assurer sa connexion à un crochet d'attelage élévateur (22) et ledit second châssis (14) étant muni de seconds moyens de fixation (45) pour assurer sa connexion au porte-charge, caractérisé en ce que les premiers (28) et seconds moyens d'accouplement (45) sont positionnés dans un plan, dans lequel est également située au moins une partie des moyens de guidage (52).

2. Instrument de pesage selon la revendication 1, caractérisé en ce que les moyens de guidage (52) sont constitués d'une bande ou de plusieurs bandes relativement fines (53, 59) qui sont agencées horizontalement entre les châssis (13, 14) et en ce qu'elles sont de préférence constituées d'acier à ressort à lames.

3. Instrument de pesage selon la revendication 2, caractérisé en ce que les châssis (13, 14) sont connectés mutuellement par l'intermédiaire d'une bande (53, 59) au niveau d'au moins trois emplacements.

4. Instrument de pesage selon la revendication 2 ou 3, caractérisée en ce que les bandes (53, 59) ont de petites parties de flexion directement au niveau de leurs points de fixation aux châssis (13, 14).

5. Instrument de pesage selon la revendication 2, 3 ou 4, caractérisé en ce qu'est agencée une bande de support (58, 65) sur les deux côtés de la partie centrale d'une bande (53, 59).

6. Instrument de pesage selon l'une quelconque des revendications précédentes, caractérisé en ce que le premier châssis (13) a la forme d'un trapèze dont les côtés parallèles sont horizontaux, le plus long étant situé au niveau de la partie inférieure, alors que le second châssis est en forme de 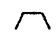 .

7. Instrument de pesage selon l'une quelconque des revendications 3 à 6, caractérisé en ce qu'une première bande (53) est disposée à proximité du côté supérieur entre les châssis (13, 14) et les deux autres bandes (59) sont agencées entre les jambes des châssis (13, 14) à proximité de l'extrémité inférieure de chacune des jambes.

8. Instrument de pesage selon l'une quelconque des revendications précédentes, caractérisé en ce que les premiers et seconds moyens de fixation (28, 45) sont tous deux munis de trois organes de fixation, le premier étant agencé à proximité des côtés supérieurs des châssis (13, 14) et les autres étant disposés à proximité de l'extrémité inférieure de chacune des jambes des châssis (13, 14).

9. Instrument de pesage selon la revendication 8, caractérisé en ce qu'à proximité des extrémités inférieures des châssis (13, 14), les organes de fixation du premier châssis (13) sont situés sous les organes de fixation du second châssis (14).

10. Instrument de pesage selon la revendication 8 ou 9, caractérisé en ce qu'à proximité des côtés supérieurs des châssis (13, 14), l'organe de fixation du premier châssis (13) est situé à un niveau inférieur à celui du second châssis (14), et en ce que l'organe de fixation (24) du premier châssis (13) est agencé du côté de l'instrument de pesage où le porte-charge est connecté, tandis que l'organe de fixation (41) du second châssis (14) est agencé du côté de l'instrument de pesage où un tracteur est connecté.

11. Instrument de pesage selon l'une quelconque des revendications précédentes, caractérisé en ce que le capteur (19), par l'intermédiaire duquel est déterminée la force du second châssis (14) sur le premier (13), comporte une tige de flexion (20) munie de jauges de contrainte.

12. Instrument de pesage selon l'une quelconque des revendications précédentes, caractérisé en ce que l'instrument de pesage comporte un dispositif de mesure électronique (49) comportant des moyens de correction de poids, par l'intermédiaire desquels la force déterminée par le capteur (19) est corrigée d'une manière telle que, indépendamment de l'angle selon lequel l'instrument de pesage est situé par rapport à un plan de référence, le poids réel du porte-charge au moins est défini.

13. Instrument de pesage selon la revendication 12, caractérisé en ce que les moyens de correction de poids comportent un inclinomètre.

14. Instrument de pesage selon la revendication 12 ou 13, caractérisé en ce que, par l'intermédiaire du dispositif de mesure électronique (49), on peut définir au moins la diminution en poids du matériel présent dans un compartiment de stockage, par exemple la trémie (3) d'un épandeur d'engrais (1), et en ce que, sur la base de cette diminution en poids et de la diminution voulue en poids, le dispositif de mesure électronique (49) émet un signal opérationnel à une installation de dosage, de manière à obtenir l'écoulement massique voulu à partir du compartiment de stockage.

15. Instrument de pesage selon l'une quelconque des revendications précédentes, caractérisé en ce que, par l'intermédiaire du dispositif de mesure électronique (49), le poids à vide et le poids brut du porte-charge peuvent être définis et enregistrés dans une mémoire, tandis qu'une valeur de seuil concernant le poids brut a été entrée dans le dispositif de mesure électronique (49), un signal étant émis lors du dépassement de celle-ci.

16. Instrument de pesage selon la revendication 15, caractérisé en ce que le signal est un signal audible et/ou un signal visuel.

17. Instrument de pesage selon la revendication 15, caractérisé en ce que la valeur de seuil peut être ajustée.

18. Instrument de pesage selon la revendication 15, caractérisé en ce que la valeur de seuil est constituée d'un poids net minimum de matériel, tel que de l'engrais, des semences, du fourrage, etc., présent dans la trémie d'un porte-charge.
